# EUROPEAN PATENT APPLICATION

(11) **EP 4 310 822 A1**
(43) Date of publication of application: **24.01.2024**
(21) Application number: 23165204.1
(22) Date of filing: 29.03.2023
(51) Int. Cl.: G09G 3/20

(54) **ELECTRONIC LABEL DEVICE FOR ELECTRONIC SHELF LABEL SYSTEM**

(30) Priority: 22.07.2022 CN 202210869958
(71) Applicant: SES-imagotag SA, 92000 Nanterre (FR)
(72) Inventor: HUANG, Chao-Hsuan, Tainan city 74144 (TW); CHANG, Lung-Pin, Tainan City 74144 (TW); WANG, Yew-Chun, Tainan City 74144 (TW)
(74) Representative: Zimmermann, Tankred Klaus

(57) **Abstract**

An electronic label device for an electronic shelf label system includes a display module, a driving chip and a system circuit board. The display module includes a driving substrate and a display medium arranged on the driving substrate. The driving chip is arranged on the driving substrate and is electrically connected with the driving substrate. The driving chip controls the display module to display images. The driving chip includes a switch circuit. The system circuit board is electrically connected with the driving substrate and the driving chip. The system circuit board includes a main controller and a light-emitting element, which is electrically connected with the switch circuit. The main controller transmits a control signal to the driving chip, and the driving chip controls the switch circuit, based on the control signal, to drive the light-emitting element to emit light.

## Description

### BACKGROUND

### Technology Field

The present invention relates to an electronic device and, in particular, to an electronic label device for an electronic shelf label system.

### Description of Related Art

In the picking process of the conventional electronic shelf label system, the electronic label device for displaying the product information is usually attached to the shelf. During the picking process, the operator can send a signal to the corresponding electronic label device through the system host, and then the LED(s) (light-emitting diode) of the electronic label device can flash. Accordingly, the operator can quickly find the target shelf and pick up the desired item from the shelf.

In the conventional art, the electronic label device usually includes a display module and a system circuit board connected to the display module. The system circuit board is usually configured with a main controller, which can function to control the display module and the LED(s) arranged on the system circuit board. However, since the switch circuit that controls the LED(s) to emit flickering light is also arranged on the system circuit board, the overall size of the system circuit board is relatively large. Moreover, the number of the interfaces for transmitting control signals to the main controller of the switch circuit (e.g. General-purpose input/output (GPIO)) is also relatively large, resulting in higher cost of the main controller and system circuit board.

### SUMMARY

Embodiments of the present invention are directed to an electronic label device for an electronic shelf label system. Compared to the conventional art, the electronic label device of this invention has a smaller overall size and lower cost.

Embodiments of the present invention are directed to an electronic label device, which includes a display module, a driving chip and a system circuit board. The display module includes a driving substrate and a display medium, wherein the display medium is arranged on the driving substrate. The driving chip is arranged on the driving substrate and is electrically connected with the driving substrate. The driving chip controls the display module to display images, and the driving chip includes a switch circuit. The system circuit board is electrically connected with the driving substrate and the driving chip. The system circuit board includes a main controller and a light-emitting element, and the light-emitting element is electrically connected with the switch circuit. The main controller transmits a control signal to the driving chip, and the driving chip controls the switch circuit, based on the control signal, to drive the light-emitting element to emit light.

In one aspect of the embodiment, the display medium includes an E-paper film, liquid crystals, light-emitting diodes, or organic light-emitting diodes.

In one aspect of the embodiment, the driving chip further includes a scan driver and/or a data driver of the display module.

In one aspect of the embodiment, the switch circuit includes a resistor and a switch element, a first electrode of the light-emitting element connects to a power source, two ends of the resistor connect to a second electrode of the light-emitting element and a first end of the switch element, respectively, and a second end of the switch element connects to a ground terminal.

In one aspect of the embodiment, the driving chip controls a control end of the switch element based on the control signal.

In one aspect of the embodiment, the driving chip outputs a PWM signal based on the control signal and transmits the PWM signal to a control end of the switch element.

In one aspect of the embodiment, the driving chip further includes a register, the control signal includes at least one instruction, the register stores the at least one instruction, and the driving chip controls the switch circuit based on the at least one instruction stored in the register.

In one aspect of the embodiment, the system circuit board further includes an antenna element, the main controller is electrically connected with the antenna element, and the main controller outputs the control signal based on an RF signal received by the antenna element.

In one aspect of the embodiment, the system circuit board includes a plurality of the light-emitting elements, and the light-emitting elements include a plurality of light-emitting diodes for emitting different color lights.

In one aspect of the embodiment, the electronic label device further includes a connecting circuit board connected with the system circuit board and the driving substrate, and the system circuit board is electrically connected with the driving substrate and the driving chip via the connecting circuit board.

As mentioned above, in the electronic label device of this invention, the driving chip is arranged on the driving substrate and is electrically connected with the driving substrate, wherein the driving chip controls the display module to display images, and the driving chip includes a switch circuit. The system circuit board is electrically connected with the driving substrate and the driving chip, and the system circuit board includes a main controller and a light-emitting element, which is electrically connected with the switch circuit. The main controller transmits a control signal to the driving chip, so that the driving chip can control the switch circuit, based on the control signal, to drive the light-emitting element to emit light. Compared with the conventional art, since the switch circuit for controlling the light-emitting element to emit light is manufactured in the driving chip, it is not needed to configure the switch circuit for controlling the light-emitting element on the system circuit board. Therefore, the overall size of the system circuit board can be relatively smaller. In addition, the amount of the interfaces of the main controller for transmitting the control signal to the switch circuit can be reduced, thereby decreasing the manufacturing cost of the main controller (as well as the system circuit board).

### BRIEF DESCRIPTION OF THE DRAWINGS

The invention will become more fully understood from the detailed description and accompanying drawings, which are given for illustration only, and thus are not limitative of the present invention, and wherein:
FIG 1 is a schematic diagram showing an electronic label device for an electronic shelf label system according to an embodiment of this invention;
FIG 2 is a schematic diagram showing the circuits of the switch circuit and the light-emitting element in the electronic label device of FIG 1; and
FIG 3 is a schematic diagram showing an electronic label device according to another embodiment of this invention.

### DETAILED DESCRIPTION OF THE INVENTION

The present invention will be apparent from the following detailed description, which proceeds with reference to the accompanying drawings, wherein the same references relate to the same elements.

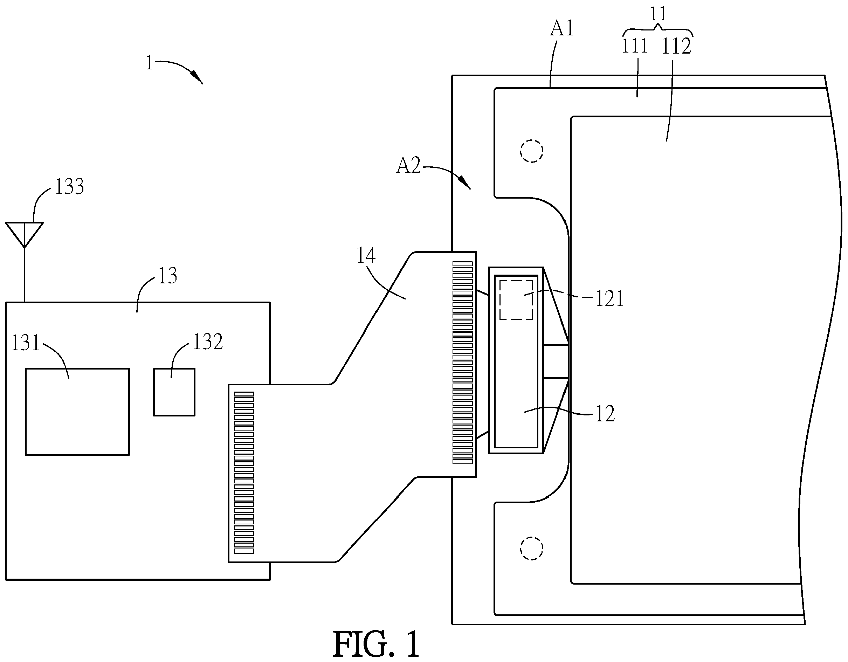

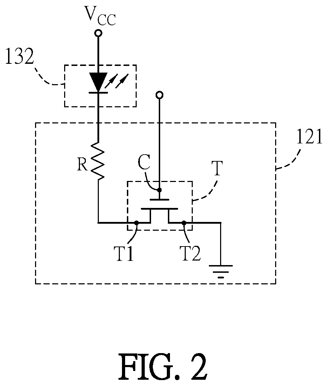

FIG 1 is a schematic diagram showing an electronic label device for an electronic shelf label system according to an embodiment of this invention, and FIG 2 is a schematic diagram showing the circuits of the switch circuit and the light-emitting element in the electronic label device of FIG 1.

Referring to FIGS. 1 and 2, an electronic label device 1, which is applied to an electronic shelf label system, includes a display module 11, a driving chip 12 and a system circuit board 13. Moreover, in this embodiment, the electronic label device 1 can further include a connecting circuit board 14.

The display module 11 includes a driving substrate 111 and a display medium 112, and the display medium 112 is arranged on the driving substrate 111. In this embodiment, the driving substrate 111 includes a display arrangement area A1 and a peripheral area A2, which is located adjacent to the display arrangement area A1. In this case, the display arrangement area A1 indicates the area for arranging the display medium 112, and the peripheral area A2 indicates the non-display area and is located adjacent to the display arrangement area A1. In this embodiment, for example, the peripheral area A2 surrounds the periphery of the display arrangement area A1. The material of the driving substrate 111 can be optionally changed based on the final product. In this case, the driving substrate 111 can include a glass substrate, a plastic substrate or a flexible or resilient substrate on which one or more pixel circuits are arranged. The flexible or resilient substrate can be made of, for example but not limited to, polyimide (PI). In some embodiments, the driving substrate 111 includes a plurality of pixels, and each pixel includes a pixel circuit. Each pixel circuit includes at least one switch (e.g. TFT) and pixel electrodes, so that the driving substrate 111 can function as an AM (Active Matrix) TFT substrate, for controlling the formation of electric field of each pixel. In other embodiments, the driving substrate 111 can be a PM (Passive Matrix) driving substrate, and this invention is not limited thereto.

The display medium 112 is arranged on the display arrangement area A1 of the driving substrate 111, and the driving substrate 111 can control the display medium 112 to display images. The display medium 112 can be an E-paper film, liquid crystals, LEDs or OLEDs. In other words, the display module 11 can be an E-paper display module, an LCD module, an LED display module, or an OLED display module. The display medium 112 of this embodiment is, for example, a bistable E-paper film, which has the advantages of power saving and wide viewing angle. The bistable E-paper film can be, for example but not limited to, a microcapsule type E-paper, a microcup type E-paper, or a cholesteric liquid crystal E-paper. In some embodiments, if the display medium 112 is a microcapsule type or microcup type E-paper, the display medium may include electrophoretic substances. The electrophoretic substances include a plurality of charged light-colored pigment particles and a dark-colored medium solution, and the pigment particles and the medium solution are respectively accommodated in a plurality of microcapsules. The microcapsules can be combined with an adhesive. Alternatively, the content of the electrophoretic substances can be a combination of dark-colored pigment particles and light-colored medium solution. In another case, the content of the electrophoretic substances can be a combination of pigment particles of multiple colors and a light-colored medium solution. This invention is not limited thereto.

The driving chip 12 is located adjacent to the display medium 112 and is arranged on the driving substrate 111. In this case, the driving chip 12 is arranged on the peripheral area A2 of the driving substrate 111, and is electrically connected with the driving substrate 111. Through the driving substrate 111, the driving chip 12 can control the display medium 112 to display images. In this embodiment, the driving chip 12 is an IC, and it is arranged on the peripheral area A2 by COG (Chip On Glass) technology. In some embodiments, the driving chip 12 can include a scan driver and/or a data driver of the display module 11. In other words, the driving chip 12 includes the scan line driving function or the data line driving function of the display module 11, or includes the scan line driving function and the data line driving function (integrated function) of the display module 11. In this embodiment, the driving chip 12 includes the scan line driving function and the data line driving function of the display module 11.

Furthermore, the driving chip 12 includes a switch circuit 121. Specifically, during the IC manufacturing process for fabricating the driving chip 12, the scan driver and/or the data driver as well as the switch circuit 121 are together formed in the driving chip 12 by the IC manufacturing process (semiconductor manufacturing process), so that the driving chip 12 also includes the switch circuit 121.

The system circuit board 13 is electrically connected with the driving substrate 111 and the driving chip 12, so that it can control the display module 11 to display images. For example, the system circuit board 13 can be a printed circuit board. The system circuit board 13 includes a main controller 131 and a light-emitting element 132. The main controller 131 can include at least one microcontroller unit (MCU) for controlling the operation of the electronic label device 1. The light-emitting element 132 can be, for example but not limited to, an LED, which is electrically connected with the switch circuit 121. In addition, the system circuit board 13 of this embodiment can further include an antenna element 133, which is electrically connected with the main controller 131. The main controller 131 can output a control signal based on an RF signal received by the antenna element 133. Moreover, the main controller 131 can transmit the control signal to the driving chip 12, so that the driving chip 12 can control the switch circuit 121, based on the control signal, to drive the light-emitting element 132 to emit light.

In the embodiment, the switch circuit 121 is located inside the driving chip 12 and includes a resistor R and a switch element T, and the light-emitting element 132 (LED) is arranged on the system circuit board 132. In this case, the switch element T can be, for example but not limited to, a MOSFET, and the resistor R can be a current-limiting resistor for limiting the current flowing through the light-emitting element 132. As shown in FIG 2, a first electrode (anode) of the light-emitting element 132 connects a power source Vcc, two ends of the resistor R connect to a second electrode (cathode) of the light-emitting element 132 and a first end T1 (first source/drain) of the switch element T, respectively, and a second end T2 (second source/drain) of the switch element T connects to a ground terminal. In addition, the switch element T further includes a control end C (gate). In this case, the main controller 131 can transmit the control signal to the driving chip 12, and then the driving chip 12 can control the control end C of the switch element T based on the control signal, thereby controlling to turn on or turn off the switch element T so as to turn on or turn off the light-emitting element 132.

In some embodiments, the driving chip 12 can further include a PWM (pulse-width modulation) circuit, so that the PWM circuit of the driving chip 12 can output a PWM signal based on the control signal. The PWM signal can be transmit to the control end C of the switch element T for controlling the lighting periods (flicking) and brightness of the light-emitting element 132. In some embodiments, the driving chip 12 can control the brightness of the light-emitting element 132 by current. In some embodiments, the system circuit board 13 may include a plurality of light-emitting elements 132, and the light-emitting elements 132 may include a plurality of LEDs (e.g. 3 LEDs) for emitting different color lights. The driving chip 12 can individually control these LEDs so as to the light of different colors or different flicking frequency for satisfying the requirements of different environments or functions. The switch circuit 121 of this embodiment including the resistor R and the switch element T is for an example only and is not to limit the scope of this invention.

The connecting circuit board 14 is connected with the system circuit board 13 and the driving substrate 111, and the system circuit board 13 is electrically connected with the driving substrate 111 and the driving chip 12 via the connecting circuit board 14. Specifically, the connecting circuit board 14 of this embodiment can be, for example but not limited to, a flexible printed circuit board (FPC), and the driving substrate 111 (the driving chip 12) and the system circuit board 13 are connected to the opposite sides of the connecting circuit board 14, respectively, and are thus electrically connected with the connecting circuit board 14. Therefore, the main controller 131 of the system circuit board 13 can electrically connect with the driving substrate 111 and the driving chip 12 via the connecting circuit board 14, so that the driving signals can be transmitted to the driving substrate 111 so as to control the display medium 112 to display images.

In this embodiment, when the user operates the electronic shelf label system to pick up goods from the shelf, the command can be outputted from the control host of the system to the electronic label device 1, which is attached to the shelf. In this case, the control host can output, for example, an RF (radio frequency) signal, and then the antenna element 133 of the electronic label device 1 attached to the shelf receives the RF signal. Afterwards, the main controller 131 can output a corresponding control signal according to the RF signal, and the control signal is transmitted to the driving chip 12 through, for example, a serial peripheral interface (SPI). Accordingly, the driving chip 12 can control the switch element T of the switch circuit 121 based on the control signal, thereby controlling to turn on or turn off the light-emitting element 132 (flicking). Then, the user (operator) can see the LED on a certain shelf flicking, and thus quickly know where the target goods to be picked are. As a result, the operator can quickly find the goods he/she is looking for.

In this embodiment, since the switch circuit 121 for controlling the light-emitting element 132 to emit flickering light is fabricated in the driving chip 12, it is not needed to provide the switch circuit for controlling the light-emitting element 132 in the system circuit board 13. Thus, the overall size of the system circuit board 13 can be relatively smaller. In addition, the number of interfaces (e.g. GPIO interfaces) for transmitting the control signal to the main controller 131 of the switch circuit 121 can be relatively less, and the cost can be relatively lower (because the controller with less interfaces is used).

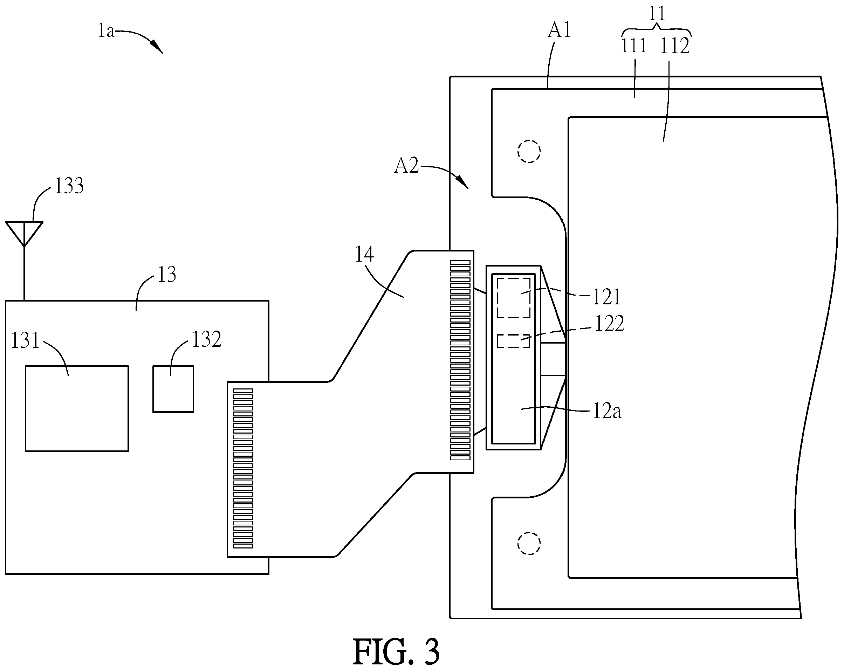

FIG 3 is a schematic diagram showing an electronic label device 1a according to another embodiment of this invention.

As shown in FIG 3, the component configurations and connections of the electronic label device 1a of this embodiment are mostly the same as those of the electronic label device 1 of the previous embodiment. Unlike the previous embodiment, the driving chip 12a of the electronic label device 1a of this embodiment further includes a register 122. In this case, the control signal, which is transmitted from the main controller 131, includes at least one instruction, and the register 122 stores the at least one instruction. Thus, the driving chip 12 can control the switch circuit 121 based on the at least one instruction stored in the register 122, thereby controlling the light-emitting element 132. In this embodiment, the at least one instruction can include the instruction for controlling the turn-on period of the light-emitting element 132, the turn-off period of the light-emitting element 132, and/or the brightness of the light-emitting element 132.

In summary, in the electronic label device of this invention, the driving chip is arranged on the driving substrate and is electrically connected with the driving substrate, wherein the driving chip controls the display module to display images, and the driving chip includes a switch circuit. The system circuit board is electrically connected with the driving substrate and the driving chip, and the system circuit board includes a main controller and a light-emitting element, which is electrically connected with the switch circuit. The main controller transmits a control signal to the driving chip, so that the driving chip can control the switch circuit, based on the control signal, to drive the light-emitting element to emit light. Compared with the conventional art, since the switch circuit for controlling the light-emitting element to emit light is manufactured in the driving chip, it is not needed to configure the switch circuit for controlling the light-emitting element on the system circuit board. Therefore, the overall size of the system circuit board can be relatively smaller. In addition, the amount of the interfaces of the main controller for transmitting the control signal to the switch circuit can be reduced, thereby decreasing the manufacturing cost of the main controller (as well as the system circuit board).

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. An electronic label device for an electronic shelf label system, comprising:
a display module comprising a driving substrate and a display medium, wherein the display medium is arranged on the driving substrate;
a driving chip arranged on and electrically connected with the driving substrate, wherein the driving chip controls the display module to display images, and the driving chip comprises a switch circuit; and
a system circuit board electrically connected with the driving substrate and the driving chip, wherein the system circuit board comprises a main controller and a light-emitting element, and the light-emitting element is electrically connected with the switch circuit;
wherein, the main controller transmits a control signal to the driving chip, and the driving chip controls the switch circuit, based on the control signal, to drive the light-emitting element to emit light.

2. The electronic label device of claim 1, wherein the display medium comprises an E-paper film, liquid crystals, light-emitting diodes, or organic light-emitting diodes.

3. The electronic label device of claim 1, wherein the driving chip further comprises a scan driver and/or a data driver of the display module.

4. The electronic label device of claim 1, wherein the switch circuit comprises a resistor and a switch element, a first electrode of the light-emitting element connects to a power source, two ends of the resistor connect to a second electrode of the light-emitting element and a first end of the switch element, respectively, and a second end of the switch element connects to a ground terminal.

5. The electronic label device of claim 4, wherein the driving chip controls a control end of the switch element based on the control signal.

6. The electronic label device of claim 4, wherein the driving chip outputs a PWM signal based on the control signal and transmits the PWM signal to a control end of the switch element.

7. The electronic label device of claim 1, wherein the driving chip further comprises a register, the control signal comprises at least one instruction, the register stores the at least one instruction, and the driving chip controls the switch circuit based on the at least one instruction stored in the register.

8. The electronic label device of claim 1, wherein the system circuit board further comprises an antenna element, the main controller is electrically connected with the antenna element, and the main controller outputs the control signal based on an RF signal received by the antenna element.

9. The electronic label device of claim 1, wherein the system circuit board comprises a plurality of the light-emitting elements, and the light-emitting elements comprise a plurality of light-emitting diodes for emitting different color lights.

10. The electronic label device of claim 1, further comprising:
a connecting circuit board connected with the system circuit board and the driving substrate, wherein the system circuit board is electrically connected with the driving substrate and the driving chip via the connecting circuit board.
